# EUROPEAN PATENT APPLICATION

(11) **EP 3 159 431 A1**
(43) Date of publication of application: **26.04.2017**
(21) Application number: 16194279.2
(22) Date of filing: 18.10.2016
(51) Int. Cl.: C23C 24/00, C23C 28/00, B03C 1/00, C23C 4/00, C23C 4/12

(54) **COATING METHOD USING RECYCLED POWDER MATERIALS AND COATED ARTICLE**

(30) Priority: 20.10.2015 US 201514887756
(71) Applicant: General Electric Company, Schenectady, NY 12345 (US)
(72) Inventor: LAU, Yuk-Chiu, Schenectady, SC 12345 (US); BUCCI, David Vincent, Greenville, SC 29615 (US); TIBBETTS, Nicole Jessica, Niskayuna, NY 12309 (US); SCHAEFFER, Jon Conrad, Greenville, SC 29615 (US)
(74) Representative: Pöpper, Evamaria

(57) **Abstract**

A coating method is disclosed including forming a first layer (300) on a substrate (200) and forming a second layer (302) on the first layer (300). Forming the first layer (300) includes applying virgin powder particles (204) containing at least one rare-earth doped ceramic oxide (206) onto the substrate (200). Forming the second layer (302) includes applying recycled powder particles (208) containing the at least one rare-earth doped ceramic oxide (206) and at least one extraneous material (210) onto the first layer (300). Another coating method is disclosed including mixing the virgin powder particles (204) with the recycled powder particles (208) to form a mixture of powder particles (212), and applying the mixture of powder particles (212) onto the substrate (200). A coated article (100) is disclosed including a substrate (200) and a coating (202) on the substrate (200), the coating (202) including virgin powder particles (204) of at least one rare-earth doped ceramic oxide (206) and recycled powder particles (208) including the at least one rare-earth doped ceramic oxide (206) and at least one extraneous material (210).

## Description

### FIELD OF THE INVENTION

The present invention is directed to coating methods and coated articles. More particularly, the present invention is directed to coating methods and coated articles including virgin powder particles and recycled powder particles.

### BACKGROUND OF THE INVENTION

The processing technologies involved in certain manufacturing fields employ deposition techniques that involve considerable waste. The ability to recover the constituent materials of the overspray minimizes the cost of waste disposal, reduces the amount of new materials used, and preserves natural resources.

Gas turbines, such as aircraft engines and power generation systems, must satisfy the highest demands with respect to reliability, power, efficiency, economy, and operating service life. The use of coatings on turbine components such as combustors, combustion liners, combustion transition pieces, combustion hardware, turbine blades (buckets), vanes (nozzles) and shrouds is important in commercial as well as military gas turbine engines. Coatings, such as bond coatings and thermal barrier coatings, contribute to desirable performance characteristics and operating in certain harsh environmental conditions. Such coatings may incorporate rare-earth doped ceramic oxides such as yttria stabilized zirconia.

The coatings may be applied by techniques such as air plasma spray, high velocity oxygen fuel thermal spray, high velocity air fuel spray, cold spray, and vacuum plasma spray. These application techniques are often inefficient, resulting in significant waste of coating materials as overspray. Three-dimensional printing processes may also result in significant waste of coating materials as overspray. Since coating booths (including three-dimensional printing booths) are used for various coating applications interchangeably, the various materials applied in coating and three-dimensional printing applications (and other contaminants) become comingled in the overspray. Rare-earth doped ceramic oxides are expensive and the overspray materials require costly disposal.

One method of recycling overspray containing rare-earth doped ceramic oxides is disclosed by Monk et al. in U.S. Patent No. 8,961,645, the disclosures of which are incorporated herein in their entirety, as if fully restated.

### BRIEF DESCRIPTION OF THE INVENTION

In an exemplary embodiment, a coating method includes forming a first layer on a substrate and forming a second layer on the first layer. Forming the first layer includes applying virgin powder particles onto the substrate, the virgin powder particles including at least one rare-earth doped ceramic oxide. Forming the second layer includes applying recycled powder particles onto the first layer, the recycled powder particles including the at least one rare-earth doped ceramic oxide and at least one extraneous material, wherein the first layer and the second layer define a coating.

In another exemplary embodiment, a coating method includes mixing virgin powder particles including at least one rare-earth doped ceramic oxide with recycled powder particles including the at least one rare-earth doped ceramic oxide and at least one extraneous material to form a mixture of powder particles, and applying the mixture of powder particles onto a substrate, forming a coating.

In another exemplary embodiment, a coated article includes a substrate and a coating on the substrate, the coating including virgin powder particles of at least one rare-earth doped ceramic oxide and recycled powder particles including the at least one rare-earth doped ceramic oxide and at least one extraneous material.

Other features and advantages of the present invention will be apparent from the following more detailed description of the preferred embodiment, taken in conjunction with the accompanying drawings, which illustrate, by way of example, the principles of the invention.

### BRIEF DESCRIPTION OF THE DRAWINGS

FIG. 1 is a perspective view of a coated article, according to an embodiment of the disclosure.
FIG. 2 is a sectional view along lines 2-2 of FIG. 1 of the coated article, according to an embodiment of the disclosure.
FIG. 3 is a sectional view along lines 3-3 of FIG. 1 of the coated article, according to an embodiment of the disclosure.

Wherever possible, the same reference numbers will be used throughout the drawings to represent the same parts.

### DETAILED DESCRIPTION OF THE INVENTION

Provided are exemplary coated articles and coating methods. Embodiments of the present disclosure, in comparison to methods not utilizing one or more features disclosed herein, reduce costs, reduce waste, reduce environmental impact, improve process efficiency, improve recycled coating performance or a combination thereof.

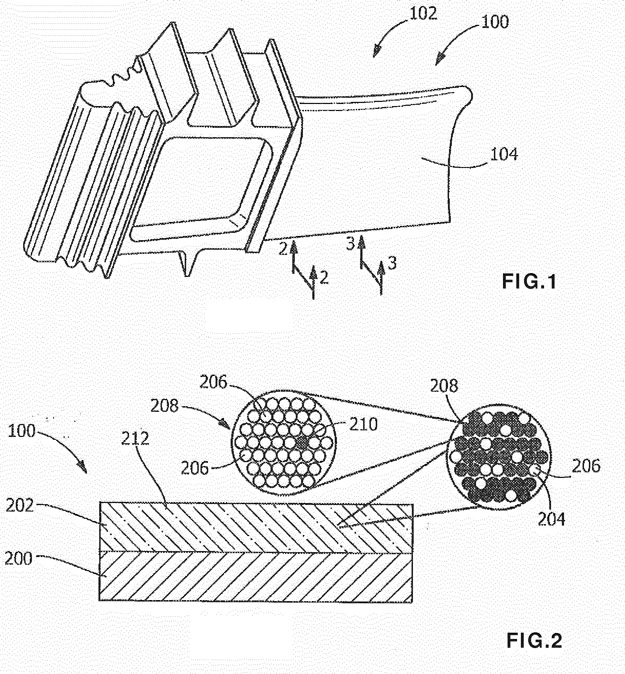

Referring to FIG. 1, in one embodiment, a coated article 100 is depicted. The coated article 100 may be any suitable component, including, but not limited to, a turbine component (102), a turbine hot gas path component, a turbine bucket (blade) (104), a turbine nozzle (vane), a turbine shroud, a turbine combustor, a turbine combustion liner, a turbine combustion transition piece, turbine combustion hardware, or a combination thereof.

Referring to FIG. 2, in one embodiment, the coated article 100 includes a substrate 200 and a coating 202 on the substrate 200. The coating 202 includes virgin powder particles 204 including at least one rare-earth doped ceramic oxide 206 and recycled powder particles 208 including the at least one rare-earth doped ceramic oxide 206 and at least one extraneous material 210. In another embodiment, the coating 202 consists essentially of the virgin powder particles 204 and the recycled powder particles 208, wherein the at least one extraneous material 210 is derived from impurities remaining after a recycling process producing the recycled powder particles 208, and wherein the presence of incidental impurities in the coating 202 which do not materially affect the physical or chemical properties of the coating 202 is not precluded.

As used herein, "virgin" describes a material or materials not previously intermingled with other materials in a coating process or similar industrial process, or which has been purified sufficiently to have physical and chemical properties which do not materially deviate from the physical and chemical properties of the material or materials prior to such intermingling. "Virgin" may describe a mixture of distinct materials provided that the distinct materials are deliberately mixed to achieve the physical or chemical properties of the mixture. "Virgin" does not exclude the presence of incidental impurities which do not materially affect the physical or chemical properties of the material or materials. As used herein, "extraneous" refers to any additional material or materials not present in, or present in greater concentrations than occurring in, the virgin material or materials.

In one embodiment, a coating method for producing the coating 202 on the substrate 200, as shown in FIG. 2, includes mixing the virgin powder particles 204 including the at least one rare-earth doped ceramic oxide 206 with the recycled powder particles 208 including the at least one rare-earth doped ceramic oxide 206 and at least one extraneous material 210 to form a mixture of powder particles 212, and applying the mixture of powder particles 212 onto the substrate 200, forming the coating 202.

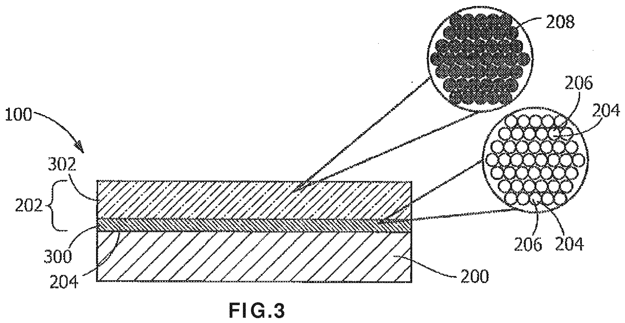

Referring to FIG. 3, in another embodiment, the coating 202 on the substrate 200 of the coated article 100 includes a first layer 300 containing the virgin powder particles 204 including the at least one rare-earth doped ceramic oxide 206, and a second layer 302 containing the recycled powder particles 208 including the at least one rare-earth doped ceramic oxide 206 and the at least one extraneous material 210. The second layer 302 may also include (not shown) the virgin powder particles 204, forming a mixture of powder particles 212. In another embodiment, the first layer 300 consists essentially of the virgin powder particles 204 and the second layer 302 consists essentially of the virgin powder particles 204 and the recycled powder particles 208, wherein the at least one extraneous material 210 is derived from impurities remaining after a recycling process producing the recycled powder particles 208, and wherein the presence of incidental impurities in the first layer 300 and the second layer 302 which do not materially affect the physical or chemical properties of the coating 202 is not precluded. In a further embodiment, the coating 202 consists essentially of the first layer 300 and the second layer 302, wherein the presence of incidental impurities between the first layer 300 and the second layer 302 which do not materially affect the physical or chemical properties of the coating 202 is not precluded.

In one embodiment, a coating method for producing the coating 202 on the substrate 200, as shown in FIG. 3, includes forming the first layer 300 on the substrate 200 and forming the second layer 302 on the first layer 300. Forming the first layer 300 includes applying the virgin powder particles 204 including the at least one rare-earth doped ceramic oxide 206 onto the substrate 200. Forming the second layer 302 includes applying the recycled powder particles 208 including the at least one rare-earth doped ceramic oxide 206 and the at least one extraneous material 210 onto the first layer 300. Forming the second layer 302 may further include mixing the recycled powder particles 208 with the virgin powder particles 204 to form a mixture of powder particles 212, and applying the mixture of powder particles 212 to the first layer 300.

Referring to FIGS. 2 and 3, the coating 202 may be any suitable coating, including a thermal barrier coating, a bond coating, a dense vertically cracked coating, a porous coating, an abradable coating, or a combination thereof.

The substrate may be any suitable material, including, but not limited to, a metal, an alloy, an iron-based alloy, a ceramic, a steel, a MCrAlY, a thermal barrier coating, a bond coating, an environmental barrier coating, a fiber glass composite, a carbon composite, a refractory alloy, a chromium-molybdenum, a chromium-molybdenum-vanadium, a cobalt-chromium-molybdenum, a superalloy, a nickel-based superalloy, a ceramic matrix composite, a carbon-fiber-reinforced carbon (C/C), a carbon-fiber-reinforced silicon carbide (C/SiC), a silicon-carbide-fiber-reinforced silicon carbide (SiC/SiC), or a combination thereof.

The at least one rare-earth doped ceramic oxide 206 may include any suitable rare-earth doped ceramic oxide, including, but not limited to, yttria stabilized zirconia, calcia stabilized zirconia, ceria stabilized zirconia, scandia stabilized zirconia, magnesia stabilized zirconia, india stabilized zirconia, lanthana stabilized zirconia, neodymia stabilized zirconia, ytterbia stabilized zirconia, strontia stabilized zirconia, barium oxide stabilized zirconia, nickel oxide stabilized zirconia, ferric oxide stabilized zirconia, cobaltous oxide stabilized zirconia, dysprosia stabilized zirconia, gadolinia stabilized zirconia, samaria stabilized zirconia, erbia stabilized zirconia, europia stabilized zirconia, praseodyrnia stabilized zirconia, and mixtures thereof.

The extraneous material may include, but is not limited to, MCrAlY materials, wherein M is Fe, Ni or Co, oxidized MCrAlY materials, foreign materials, or combination thereof. As used herein, "foreign materials" indicates materials which are not derived from overspray applied in a coating booth from which the recycled powder particles 208 are recovered.

The coating methods for producing the coatings 202 on the substrate 200, as shown in FIGS. 2 and 3, may further include forming the recycled powder particles 208. In one embodiment, forming the recycled powder particles 208 includes applying at least one magnetic field to a mixture including the at least one rare-earth doped ceramic oxide 206 and the at least one extraneous material 210 under conditions effective to yield one or more paramagnetic fractions having a portion of the at least one extraneous material 210 and a diamagnetic fraction comprising a portion of the at least one rare-earth doped ceramic oxide 206. The mixture is subjected to a first magnetic field under conditions effective to yield a first paramagnetic fraction including the at least one extraneous material 210 and a paramagnetic-diamagnetic fraction including the at least one extraneous material 210 co-mingled with the at least one rare-earth doped ceramic oxide 206. The paramagnetic-diamagnetic fraction is subjected to a second magnetic field under conditions effective to separate the paramagnetic at least one extraneous material 210 from the diamagnetic at least one rare-earth doped ceramic oxide 206, wherein the first magnetic field is weaker than the second magnetic field.

In one embodiment, the recycled powder includes at least about 70%, by weight, of the at least one rare-earth doped ceramic oxide, alternatively at least about 80%, by weight, of the at least one rare-earth doped ceramic oxide, alternatively at least about 90%, by weight, of the at least one rare-earth doped ceramic oxide, alternatively at least about 95%, by weight, of the at least one rare-earth doped ceramic oxide, alternatively at least about 97%, by weight, of the at least one rare-earth doped ceramic oxide, alternatively at least about 98%, by weight, of the at least one rare-earth doped ceramic oxide.

Applying the virgin powder particles 204, the recycled powered particles 208, or the mixture of powder particles 212 may include any suitable application technique, including, but not limited to, air plasma spray, high velocity oxygen fuel thermal spray, high velocity air fuel spray, vacuum plasma spray, cold spray or a combination thereof.

In one embodiment, the mixture of powder particles 212 includes at least about 10% by weight of the virgin powder, alternatively at least about 15% by weight of the virgin powder, alternatively at least about 25% by weight of the virgin powder, alternatively at least about 35% by weight of the virgin powder, alternatively at least about 50% by weight of the virgin powder, alternatively at least about 75% by weight of the virgin powder.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following clauses:
1. A coating method, comprising:
   forming a first layer on a substrate, forming the first layer including applying virgin powder particles onto the substrate, the virgin powder particles including at least one rare-earth doped ceramic oxide; and
   forming a second layer on the first layer, forming the second layer including applying recycled powder particles onto the first layer, the recycled powder particles including the at least one rare-earth doped ceramic oxide and at least one extraneous material,
   wherein the first layer and the second layer define a coating.
2. The coating method of clause 1, wherein the coating is selected from the group consisting of a thermal barrier coating, a bond coating, a dense vertically cracked coating, a porous coating, an abradable coating, and combinations thereof.
3. The coating method of clause 1, wherein the substrate is a turbine component.
4. The coating method of clause 1, wherein the at least one rare-earth doped ceramic oxide includes yttria stabilized zirconia.
5. The coating method of clause 1, further including forming the recycled powder particles, forming the recycled powder particles including:
   applying at least one magnetic field to a mixture including the at least one rare-earth doped ceramic oxide and the at least one extraneous material under conditions effective to yield one or more paramagnetic fractions having a portion of the at least one extraneous material and a diamagnetic fraction comprising a portion of the at least one rare-earth doped ceramic oxide;
   subjecting the mixture to a first magnetic field under conditions effective to yield a first paramagnetic fraction including the at least one extraneous material and a paramagnetic-diamagnetic fraction including the at least one extraneous material co-mingled with the at least one rare-earth doped ceramic oxide; and
   subjecting the paramagnetic-diamagnetic fraction to a second magnetic field under conditions effective to separate the paramagnetic at least one extraneous material from the diamagnetic at least one rare-earth doped ceramic oxide;
   wherein the first magnetic field is weaker than the second magnetic field.
6. The coating method of clause 1, wherein the recycled powder particles include at least about 70%, by weight, of the at least one rare-earth doped ceramic oxide.
7. The coating method of clause 1, wherein applying the virgin powder particles and the recycled powder particles includes an application technique selected from the group consisting of air plasma spray, high velocity oxygen fuel thermal spray, high velocity air fuel spray, vacuum plasma spray, cold spray and combinations thereof.
8. The coating method of clause 1, wherein forming the second layer includes mixing the recycled powder particles with the virgin powder particles to form a mixture of powder particles.
9. The method of clause 8, wherein the mixture of powder particles includes at least about 25% by weight of the virgin powder particles.
10. A coating method, comprising:
   mixing virgin powder particles including at least one rare-earth doped ceramic oxide with recycled powder particles including the at least one rare-earth doped ceramic oxide and at least one extraneous material to form a mixture of powder particles; and
   applying the mixture of powder particles onto a substrate, forming a coating.
11. The coating method of clause 10, wherein the coating is selected from the group consisting of a thermal barrier coating, a bond coating, a dense vertically cracked coating, a porous coating, an abradable coating, and combinations thereof.
12. The coating method of clause 10, wherein the substrate is a turbine component.
13. The coating method of clause 10, wherein the at least one rare-earth doped ceramic oxide includes yttria stabilized zirconia.
14. The coating method of clause 10, further including forming the recycled powder particles, forming the recycled powder particles including:
   applying at least one magnetic field to a mixture including the at least one rare-earth doped ceramic oxide and the at least one extraneous material under conditions effective to yield one or more paramagnetic fractions having a portion of the at least one extraneous material and a diamagnetic fraction comprising a portion of the at least one rare-earth doped ceramic oxide;
   subjecting the mixture to a first magnetic field under conditions effective to yield a first paramagnetic fraction including the at least one extraneous material and a paramagnetic-diamagnetic fraction including the at least one extraneous material co-mingled with the at least one rare-earth doped ceramic oxide; and
   subjecting the paramagnetic-diamagnetic fraction to a second magnetic field under conditions effective to separate the paramagnetic at least one extraneous material from the diamagnetic at least one rare-earth doped ceramic oxide;
   wherein the first magnetic field is weaker than the second magnetic field.
15. The coating method of clause 10, wherein the recycled powder particles include at least about 70%, by weight, of the at least one rare-earth doped ceramic oxide.
16. The coating method of clause 10, wherein applying the mixture of powder particles includes an application technique selected from the group consisting of air plasma spray, high velocity oxygen fuel thermal spray, high velocity air fuel spray, vacuum plasma spray, cold spray and combinations thereof.
17. The method of clause 10, wherein the mixture of powder particles includes at least about 25% by weight of the virgin powder particles.
18. A coated article, comprising a substrate and a coating on the substrate, the coating including:
   virgin powder particles including at least one rare-earth doped ceramic oxide; and
   recycled powder particles including the at least one rare-earth doped ceramic oxide and at least one extraneous material.
19. The coated article of clause 18, wherein the coating includes a first layer including the virgin powder particles and a second layer including the recycled powder particles.
20. The coated article of clause 18, wherein the substrate is a turbine component, and the coating is selected from the group consisting of a thermal barrier coating, a bond coating, a dense vertically cracked coating, a porous coating, an abradable coating, and combination thereof.

## Claims

1. A coating method, comprising:
forming a first layer (300) on a substrate (200), forming the first layer (300) including applying virgin powder particles (204) onto the substrate (200), the virgin powder particles (204) including at least one rare-earth doped ceramic oxide (206); and
forming a second layer (302) on the first layer (300), forming the second layer (302) including applying recycled powder particles (208) onto the first layer (300), the recycled powder particles (208) including the at least one rare-earth doped ceramic oxide (206) and at least one extraneous material (210),
wherein the first layer (300) and the second layer (302) define a coating (202).

2. The coating method of claim 1, wherein the substrate (200) is a turbine component (102).

3. The coating method of claim 1, wherein the at least one rare-earth doped ceramic oxide (206) includes yttria stabilized zirconia.

4. The coating method of claim 1, wherein forming the second layer (302) includes mixing the recycled powder particles (208) with the virgin powder particles (204) to form a mixture of powder particles (212).

5. The coating method of claim 1, including forming the recycled powder particles (208), forming the recycled powder particles (208) including:
applying at least one magnetic field to a mixture including the at least one rare-earth doped ceramic oxide (206) and the at least one extraneous material (210) under conditions effective to yield one or more paramagnetic fractions having a portion of the at least one extraneous material (210) and a diamagnetic fraction comprising a portion of the at least one rare-earth doped ceramic oxide (206);
subjecting the mixture to a first magnetic field under conditions effective to yield a first paramagnetic fraction including the at least one extraneous material (210) and a paramagnetic-diamagnetic fraction including the at least one extraneous material (210) co-mingled with the at least one rare-earth doped ceramic oxide (206); and
subjecting the paramagnetic-diamagnetic fraction to a second magnetic field under conditions effective to separate the paramagnetic at least one extraneous material (210) from the diamagnetic at least one rare-earth doped ceramic oxide (206);
wherein the first magnetic field is weaker than the second magnetic field.

6. The coating method of claim 1, wherein the recycled powder particles (208) include at least about 70%, by weight, of the at least one rare-earth doped ceramic oxide (206).

7. A coating method, comprising:
mixing virgin powder particles (204) including at least one rare-earth doped ceramic oxide (206) with recycled powder particles (208) including the at least one rare-earth doped ceramic oxide (206) and at least one extraneous material (210) to form a mixture of powder particles (212); and
applying the mixture of powder particles (212) onto a substrate (200), forming a coating (202).

8. The coating method of claim 7, wherein the substrate (200) is a turbine component (102).

9. The coating method of claim 7, wherein the at least one rare-earth doped ceramic oxide (206) includes yttria stabilized zirconia.

10. The coating method of claim 7, wherein the recycled powder particles (208) include at least about 70%, by weight, of the at least one rare-earth doped ceramic oxide (206).

11. The coating method of claim 7, including forming the recycled powder particles (208), forming the recycled powder particles (208) including:
applying at least one magnetic field to a mixture including the at least one rare-earth doped ceramic oxide (206) and the at least one extraneous material (210) under conditions effective to yield one or more paramagnetic fractions having a portion of the at least one extraneous material (210) and a diamagnetic fraction comprising a portion of the at least one rare-earth doped ceramic oxide (206);
subjecting the mixture to a first magnetic field under conditions effective to yield a first paramagnetic fraction including the at least one extraneous material (210) and a paramagnetic-diamagnetic fraction including the at least one extraneous material (210) co-mingled with the at least one rare-earth doped ceramic oxide (206); and
subjecting the paramagnetic-diamagnetic fraction to a second magnetic field under conditions effective to separate the paramagnetic at least one extraneous material (210) from the diamagnetic at least one rare-earth doped ceramic oxide (206);
wherein the first magnetic field is weaker than the second magnetic field.

12. The coating method of claim 7, wherein the mixture of powder particles (212) includes at least about 25% by weight of the virgin powder particles (204).

13. A coated article (100), comprising a substrate (200) and a coating (202) on the substrate (200), the coating (202) including:
virgin powder particles (204) including at least one rare-earth doped ceramic oxide (206); and
recycled powder particles (208) including the at least one rare-earth doped ceramic oxide (206) and at least one extraneous material (210).

14. The coated article (100) of claim 13, wherein the coating (202) includes a first layer (300) including the virgin powder particles (204) and a second layer (302) including the recycled powder particles (208).

15. The coated article (100) of claim 13, wherein the substrate (200) is a turbine component (102), and the coating (202) is selected from the group consisting of a thermal barrier coating, a bond coating, a dense vertically cracked coating, a porous coating, an abradable coating, and combination thereof.
